# FASCICULE DE BREVET EUROPEEN

(11) **EP 3 486 061 B1**
(45) Date de publication et mention de la délivrance du brevet: **16.07.2025**
(21) Numéro de dépôt: 17306604.4
(22) Date de dépôt: 20.11.2017
(51) Int. Cl.: B29C 43/02, B29C 43/14, B60N 2/70, B29C 44/04, B29C 37/00, B29K 75/00, B29L 31/58, B29K 105/04, B29L 31/00

(54) **PROCÉDÉ DE RÉALISATION D'UN ÉLÉMENT DE SIÈGE POUR VÉHICULE AUTOMOBILE**
VERFAHREN ZUR HERSTELLUNG EINES SITZELEMENTS FÜR EIN KRAFTFAHRZEUG
METHOD FOR MAKING A SEAT ELEMENT FOR A MOTOR VEHICLE

(43) Date de publication de la demande: 22.05.2019
(73) Titulaire: FAURECIA Sièges d'Automobile, 92000 Nanterre (FR)
(72) Inventeur: CABOUILLET, Anne-Sophie, 91870 Boissy-le-Sec (FR); ETIENNE, Fabrice, 90800 Bavilliers (FR)
(74) Mandataire: Lavoix

(56) Documents cités:
- EP-A1- 1 395 422
- EP-B1- 1 395 422
- WO-A1-2012/097055
- DE-A1- 19 619 892
- FR-A1- 2 621 527
- FR-A1- 2 934 256
- FR-A1- 3 037 846
- FR-A5- 2 084 293
- JP-A- S63 218 317
- US-A- 5 662 996
- US-A- 6 093 351
- US-A1- 2008 299 373

## Description

### Domaine

La présente demande concerne de façon générale les sièges pour véhicules automobiles et, plus particulièrement, la réalisation d'une coque et d'une garniture d'un élément de siège (assise, dossier, appui-tête, accoudoir).

### Exposé de l'art antérieur

Les sièges pour véhicules automobiles sont formés de plusieurs éléments, permettant de supporter les différentes parties du corps d'un usager, comme le dossier, l'assise, l'appui-tête, les accoudoirs etc. Les éléments de siège comprennent d'un côté une garniture supportant le corps ou une partie du corps de l'usager, et généralement, de l'autre côté, une coque rigide. La garniture comporte une matelassure revêtue d'une coiffe. La matelassure comprend le plus souvent un bloc de mousse expansée. La matelassure et la coque rigide sont généralement moulées selon la forme finale souhaitée de l'élément de siège et sont donc dédiées à un seul type de siège pour pouvoir à la fois s'assembler sur l'armature du siège et conférer à l'élément sa forme finale.

Un exemple de procédé de réalisation d'une matelassure est décrit dans le brevet FR2934256. La matelassure est ensuite recouverte d'une coiffe ayant une apparence textile (tissée ou non), en peau ou en matière synthétique et définissant l'aspect final de l'élément de siège.

Une fois moulée, la coque rigide de la face arrière est assemblée à la garniture pour former l'élément de siège.

Le document WO 02/102585 décrit un procédé de formation d'article en mousse multicouches.

Le document US 6,093,351 décrit un siège avec un matériau de surface ayant différentes duretés et un procédé de fabrication d'un tel siège.

### Résumé

Un mode de réalisation prévoit un procédé de réalisation d'un élément de siège pour véhicule automobile comprenant au moins les étapes successives suivantes : déposer dans le fond d'un moule au moins une couche de peinture ; déposer successivement une couche de mousse non expansée et une couche de mousse expansée dans le moule ; et refermer le moule.

Selon un mode de réalisation, un film fonctionnel est déposé sur la couche de mousse expansée avant la fermeture du moule.

Selon un mode de réalisation, la couche de mousse expansée est déposée à l'envers d'un film fonctionnel.

Selon un mode de réalisation, le film fonctionnel est un élément de revêtement, une nappe de renforcement mécanique, une nappe thermique, ou un film de transfert.

Selon un mode de réalisation, le moule est chauffé.

Selon un mode de réalisation, le moule est chauffé à une température de l'ordre de 70 degrés Celsius.

Selon un mode de réalisation, le moule est recouvert préalablement d'une couche d'un agent démoulant.

Selon un mode de réalisation, la couche de peinture a une épaisseur comprise entre 5 µm et 100 µm.

Selon un mode de réalisation, la couche de peinture est déposée par pulvérisation.

Selon un mode de réalisation, la couche de mousse non expansée est déposée par pulvérisation.

Selon un mode de réalisation, la couche de mousse non expansée comprend des portions d'épaisseur variable.

Selon un mode de réalisation, la couche de mousse non expansée a une épaisseur comprise entre 10 µm et quelques millimètres.

Selon un mode de réalisation, la couche de mousse expansée est déposée par pulvérisation.

Selon un mode de réalisation, la couche de mousse expansée comprend des portions d'épaisseur variable.

Selon un mode de réalisation, la couche de mousse expansée a une épaisseur comprise entre 1 mm et 60 mm.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue latérale schématique d'un siège pour véhicule automobile ;
les figures 2A à 2E sont des vues en coupe et une vue en perspective illustrant des étapes d'un mode de réalisation d'un procédé de réalisation d'un élément de siège pour véhicule automobile ; et
la figure 3A et 3B sont des vues en coupe illustrant une variante de réalisation du procédé des figures 2A à 2E.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, la réalisation des autres parties du siège n'a pas été détaillée, les modes de réalisation décrits étant compatibles avec toute réalisation habituelle d'une garniture.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un siège de véhicule automobile dans une position normale d'utilisation. Sauf précision contraire, les expressions "approximativement", "sensiblement", et "de l'ordre de" signifient à 10 % près, de préférence à 5 % près.

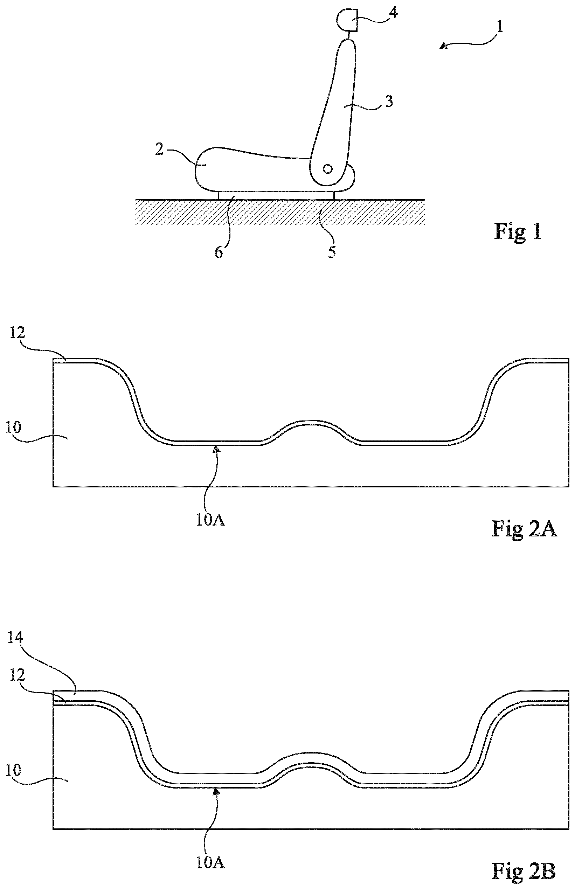

La figure 1 est une vue latérale schématique d'un siège 1 pour véhicule automobile. Un tel siège comporte une assise 2 sur laquelle est articulé un dossier 3, le plus souvent surmonté d'un appui-tête 4. L'assise 2, le dossier 3 et l'appui-tête 4 comportent chacun, sur une première face, ou face avant, en contact avec un utilisateur, une garniture et, sur une deuxième face, ou face arrière, une coque rigide. L'ensemble peut être renforcé par une armature, généralement métallique. L'assise 2 peut être liée au plancher 5 du véhicule par un mécanisme à glissières 6. Le siège 1 peut également comporter un ou plusieurs accoudoirs (non représentés).

On fera par la suite référence à la coque rigide de la face arrière des éléments du siège 1, qui est fixée à la garniture de la face avant. Toutefois, sauf précision contraire, tout ce qui sera décrit par la suite s'applique plus généralement à tout élément de siège pour lequel les mêmes problèmes se posent, par exemple, les carters latéraux du siège, un panneau arrière d'appui-tête, etc.

Les figures 2A à 2E sont des vues en coupe et une vue en perspective d'étapes d'un mode de réalisation d'un procédé de réalisation d'une coque rigide d'un élément de siège pour véhicule automobile. A titre d'exemple, la coque rigide de l'élément de siège peut être la face arrière du dossier 3.

A l'étape de la figure 2A, un moule 10 ayant la forme de la face arrière de l'élément de siège à réaliser, et plus particulièrement de la face visible de sa coque rigide, est chauffé à une température, par exemple, de l'ordre de 70 °C. La face interne 10A du moule 10 est par exemple préalablement recouvert d'une couche d'un agent démoulant (non représentée en figures 2A à 2E). Cette couche d'agent démoulant peut être par exemple déposée par pulvérisation sur la face interne 10A du moule 10. L'agent démoulant est par exemple un agent démoulant à base aqueuse.

Une couche de peinture 12 est ensuite déposée dans le moule 10 et sur la couche d'agent démoulant. La couche 12 est par exemple déposée par pulvérisation. Le moule 10 étant chauffé, la couche de peinture 12 sèche plus vite. La couche de peinture a par exemple une épaisseur comprise entre 5 µm et 100 µm, de préférence de l'ordre de 25 µm. Le moule 10 peut présenter certains reliefs afin de donner différents aspects à la couche de peinture 12, par exemple pour donner un effet grainé ou lisse, faire apparaître un logo, un motif de coutures, etc. A titre de variante, la couche de peinture 12 peut comprendre plusieurs couches de peinture ou de vernis de couleur afin de créer des aspects différents.

A l'étape de la figure 2B, une couche de mousse non expansée 14 est déposée dans le moule 10 et sur la couche de peinture 12. La couche 14 peut être par exemple déposée par pulvérisation. Le moule 10 étant chauffé, la mousse polymérise plus vite. Le temps de polymérisation de la couche 14 est par exemple compris entre quelques dizaines de secondes et quelques minutes. La couche 14 forme la coque rigide de l'élément de siège et fixe la couche de peinture 12. La couche 14 peut comprendre des portions d'épaisseur variable selon les différentes zones du moule 10. Ces portions pourront être plus ou moins rigides et/ou plus ou moins variables. La couche 14 a une épaisseur par exemple comprise entre 10 µm et quelques millimètres, de préférence de l'ordre du millimètre. La couche 14 est par exemple en polyuréthane.

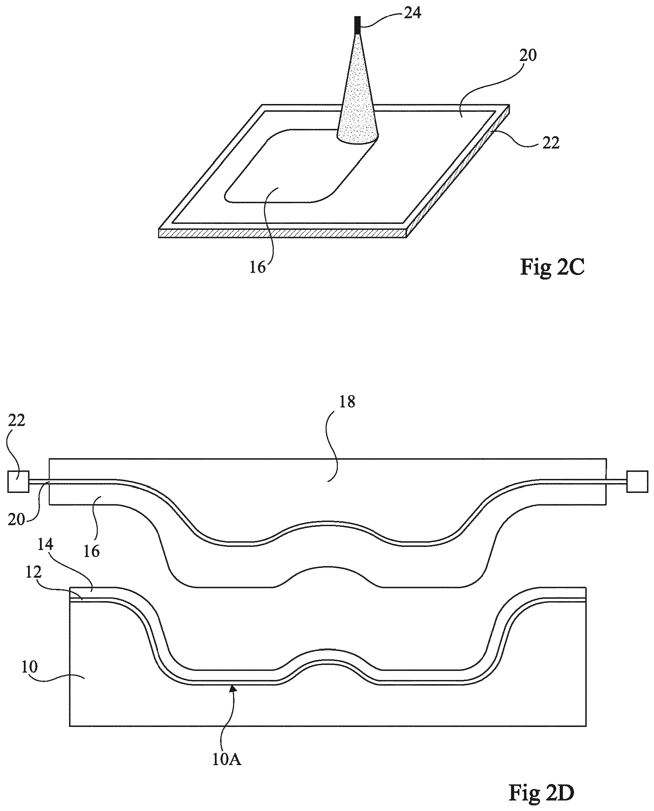

A l'étape de la figure 2C, un film fonctionnel 20 est tendu dans un cadre 22. Le film peut être un élément de revêtement (d'apparence textile (tissée ou non), en peau ou en matière synthétique), une nappe de renforcement mécanique, une nappe thermique, un film de transfert, etc. Une couche de mousse expansée 16 est déposée sur le film 20. Le film 20 est relativement souple et a une épaisseur relativement faible par rapport à l'épaisseur de la couche 16. La couche 16 est par exemple formée par un procédé de formage à froid ou à chaud. Avant d'être manipulée, on laisse polymériser la couche 16 pendant une durée comprise entre 40 secondes et 90 secondes. La couche 16 est par exemple pulvérisée à l'aide d'un outil de pulvérisation 24. La couche 16 peut avoir une épaisseur variable selon la forme finale de l'élément de siège. La couche 16 a par exemple une épaisseur comprise entre quelques millimètres et quelques centimètres, de préférence entre 1 mm et 60 mm. La couche 16 est par exemple en polyuréthane.

A l'étape de la figure 2D, l'ensemble formée à l'étape de la figure 2C est retournée et le cadre 22, maintenant le film 20 et la couche 16 de mousse expansée, est positionné entre la moule 10 et un couvercle 18, couche 16 côté moule 10. Le couvercle 18 est adapté à refermer le moule 10 pour que leur ensemble moule l'élément de siège à réaliser. Le film 20 est côté couvercle.

A titre de variante, l'ensemble formé à l'étape de la figure 2C peut être installé entre le moule 10 et le couvercle 18 en positionnant la couche 16 de mousse expansée côté couvercle.

Le couvercle 18 est pressé contre le moule 10 pour assembler la couche 16 de mousse expansée et la couche 14 de mousse non expansée. Ainsi, les couches 12, 14 et 16 et le film 20 sont moulés selon la forme de l'élément de siège à réaliser. Si le film 20 est un film de transfert, il peut être retiré avant ou après moulage.

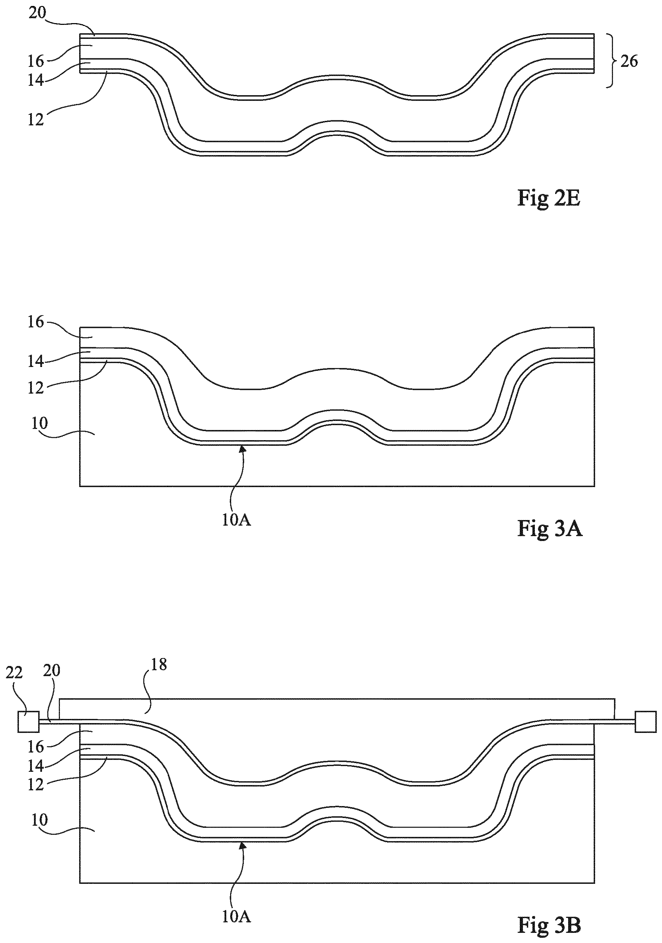

A l'étape de la figure 2E, l'élément de siège 26 comprenant la couche de peinture 12, la couche 14 de mousse non expansée, la couche 16 de mousse expansée et le film 20, est retiré du moule 10. La couche de peinture 12 et la couche 14 de mousse non expansée forme la face visible de la coque arrière rigide de l'élément de siège 26. La couche 16 de mousse expansée forme la matelassure de la garniture de l'élément de siège 26. Le film 20 forme une partie fonctionnelle de la coque de l'élément de siège 26.

Les figures 3A et 3B sont des vues en coupe d'une variante de réalisation des étapes décrites en relation avec les figures 2C et 2D.

A l'étape de la figure 3A, la couche 16 de mousse expansée est déposée directement dans le moule 10 et sur la couche 14 de mousse non expansée. La couche 16 présente les mêmes propriétés que celles décrites en relation avec la figure 2C.

A l'étape de la figure 3B, le film 20 est tendu dans le cadre 22 et est positionné entre le couvercle 18 et le moule 10. Le couvercle 18 est pressé contre le moule 10 pour assembler le film 20 et la couche 16 de mousse expansée. Ainsi, les couches 12, 14 et 16 et Le film 20 sont moulés selon la forme de l'élément de siège à réaliser.

A titre de variante, le film 20 peut être positionné directement sur la couche 14 avant la pulvérisation de la couche 16 et la fermeture du moule 10.

Un avantage du procédé de réalisation d'un élément de siège pour véhicule automobile décrit en relation avec les figures 2A à 2E et 3A et 3B est que la coque rigide et la garniture de l'élément de siège sont directement formées dans un même moule.

Des modes de réalisation particuliers ont été décrits. Diverses variantes et modifications apparaîtront à l'homme de l'art. En particulier, ce procédé de réalisation peut s'adapter à tout procédé de fabrication d'une garniture d'un élément de siège.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Procédé de réalisation d'un élément de siège (26) pour véhicule automobile comprenant une coque arrière rigide et une garniture comprenant une matelassure, le procédé de réalisation comprenant au moins les étapes successives suivantes :
déposer dans le fond (10A) d'un moule (10) au moins une couche de peinture (12) ;
déposer successivement une couche de mousse non expansée (14) et une couche de mousse expansée (16) dans le moule ; et
refermer le moule (10),
la couche de peinture (12) et la couche de mousse non expansée (14) formant la face visible de la coque arrière rigide et la couche de mousse expansée (16) formant la matelassure de la garniture de l'élément de siège.

2. Procédé de réalisation d'un élément de siège selon la revendication 1, dans lequel un film fonctionnel (20) est déposé sur la couche de mousse expansée (16) avant la fermeture du moule (10).

3. Procédé de réalisation d'un élément de siège selon la revendication 1, dans lequel la couche de mousse expansée (16) est déposée à l'envers d'un film fonctionnel (20).

4. Procédé de réalisation d'un élément de siège selon la revendication 2 ou 3, dans lequel le film fonctionnel (20) est un élément de revêtement, une nappe de renforcement mécanique, une nappe thermique, un film de transfert.

5. Procédé de réalisation d'un élément de siège selon l'une quelconque des revendications 1 à 4, dans lequel le moule (10) est chauffé.

6. Procédé de réalisation d'un élément de siège selon la revendication 5, dans lequel le moule est chauffé à une température de l'ordre de 70 degrés Celsius.

7. Procédé de réalisation d'un élément de siège selon l'une quelconque des revendications 1 à 6, dans lequel le moule (10) est recouvert préalablement d'une couche d'un agent démoulant.

8. Procédé de réalisation d'un élément de siège selon l'une quelconque des revendications 1 à 6, dans lequel la couche de peinture (12) a une épaisseur comprise entre 5 µm et 100 µm.

9. Procédé de réalisation d'un élément de siège selon l'une quelconque des revendications 1 à 8, dans lequel la couche de peinture (12) est déposée par pulvérisation.

10. Procédé de réalisation d'un élément de siège selon l'une quelconque des revendications 1 à 9, dans lequel la couche de mousse non expansée (14) est déposée par pulvérisation.

11. Procédé de réalisation d'un élément de siège selon l'une quelconque des revendications 1 à 10, dans lequel la couche de mousse non expansée (14) comprend des portions d'épaisseur variable.

12. Procédé de réalisation d'un élément de siège selon l'une quelconque des revendications 1 à 11, dans lequel la couche de mousse non expansée (14) a une épaisseur comprise entre 10 µm et quelques millimètres.

13. Procédé de réalisation d'un élément de siège selon l'une quelconque des revendications 1 à 12, dans lequel la couche de mousse expansée (16) est déposée par pulvérisation.

14. Procédé de réalisation d'un élément de siège selon l'une quelconque des revendications 1 à 13, dans lequel la couche de mousse expansée (16) comprend des portions d'épaisseur variable.

15. Procédé de réalisation d'un élément de siège selon l'une quelconque des revendications 1 à 14, dans lequel la couche de mousse expansée (16) a une épaisseur comprise entre 1 mm et 60 mm.

## Patentansprüche

1. Verfahren zum Herstellen eines Sitzelements (26) für ein Kraftfahrzeug, umfassend mindestens die folgenden aufeinanderfolgenden Schritte:
Abscheiden mindestens einer Farbschicht (12) in den Boden (10A) einer Form (10);
nacheinander Abscheiden einer nicht expandierten Schaumschicht (14) und einer expandierten Schaumschicht (16) in die Form; und
Schließen der Form (10).

2. Verfahren zum Herstellen eines Sitzelements nach Anspruch 1, wobei eine Funktionsfolie (20) auf die expandierte Schaumschicht (16) abgeschieden wird, bevor die Form (10) geschlossen wird.

3. Verfahren zum Herstellen eines Sitzelements nach Anspruch 1, wobei die expandierte Schaumschicht (16) auf die Rückseite einer Funktionsfolie (20) abgeschieden wird.

4. Verfahren zum Herstellen eines Sitzelements nach Anspruch 2 oder 3, wobei die Funktionsfolie (20) ein Beschichtungselement, eine mechanische Verstärkungsschicht, eine Thermoschicht oder eine Übertragungsfolie ist.

5. Verfahren zum Herstellen eines Sitzelements nach einem der Ansprüche 1 bis 4, wobei die Form (10) erwärmt wird.

6. Verfahren zum Herstellen eines Sitzelements nach Anspruch 5, wobei die Form auf eine Temperatur in der Größenordnung von 70 Grad Celsius erwärmt wird.

7. Verfahren zum Herstellen eines Sitzelements nach einem der Ansprüche 1 bis 6, wobei die Form (10) mit einer Trennmittelschicht vorbeschichtet wird.

8. Verfahren zum Herstellen eines Sitzelements nach einem der Ansprüche 1 bis 6, wobei die Farbschicht (12) eine Dicke von zwischen 5 µm und 100 µm aufweist.

9. Verfahren zum Herstellen eines Sitzelements nach einem der Ansprüche 1 bis 8, wobei die Farbschicht (12) durch Sprühen abgeschieden wird.

10. Verfahren zum Herstellen eines Sitzelements nach einem der Ansprüche 1 bis 9, wobei die nicht expandierte Schaumschicht (14) durch Sprühen abgeschieden wird.

11. Verfahren zum Herstellen eines Sitzelements nach einem der Ansprüche 1 bis 10, wobei die nicht expandierte Schaumschicht (14) Abschnitte variabler Dicke umfasst.

12. Verfahren zum Herstellen eines Sitzelements nach einem der Ansprüche 1 bis 11, wobei die nicht expandierte Schaumschicht (14) eine Dicke von zwischen 10 µm und mehreren Millimetern aufweist.

13. Verfahren zum Herstellen eines Sitzelements nach einem der Ansprüche 1 bis 12, wobei die expandierte Schaumschicht (16) durch Sprühen abgeschieden wird.

14. Verfahren zum Herstellen eines Sitzelements nach einem der Ansprüche 1 bis 13, wobei die expandierte Schaumschicht (16) Abschnitte variabler Dicke umfasst.

15. Verfahren zum Herstellen eines Sitzelements nach einem der Ansprüche 1 bis 14, wobei die expandierte Schaumschicht (16) eine Dicke von zwischen 1 mm und 60 mm aufweist.

## Claims

1. A method of producing a seat element (26) for a motor vehicle comprising at least the following successive steps:
depositing at least one paint layer (12) in the bottom (10A) of a mold (10);
successively depositing an unexpanded foam layer (14) and an expanded foam layer (16) in the mold; and
closing the mold (10).

2. The method for producing a seat element according to claim 1, wherein a functional film (20) is deposited on the expanded foam layer (16) before the mold (10) is closed.

3. The method for producing a seat element according to claim 1, wherein the expanded foam layer (16) is deposited on the reverse side of a functional film (20).

4. The method for producing a seat element according to claim 2 or 3, wherein the functional film (20) is a coating element, a mechanical reinforcement layer, a thermal layer or a transfer film.

5. The method for producing a seat element according to any one of claims 1 to 4, wherein the mold (10) is heated.

6. The method for producing a seat element according to claim 5, wherein the mold is heated to a temperature of the order of 70 degrees Celsius.

7. The method for producing a seat element according to any one of claims 1 to 6, wherein the mold (10) is pre-coated with a release agent layer.

8. The method for producing a seat element according to any one of claims 1 to 6, wherein the paint layer (12) has a thickness of between 5 µm and 100 µm.

9. The method for producing a seat element according to any one of claims 1 to 8, wherein the paint layer (12) is deposited by spraying.

10. The method for producing a seat element according to any one of claims 1 to 9, wherein the unexpanded foam layer (14) is deposited by spraying.

11. The method for producing a seat element according to any one of claims 1 to 10, wherein the unexpanded foam layer (14) comprises portions of variable thickness.

12. The method for producing a seat element according to any one of claims 1 to 11, wherein the unexpanded foam layer (14) has a thickness of between 10 µm and several millimeters.

13. The method for producing a seat element according to any one of claims 1 to 12, wherein the expanded foam layer (16) is deposited by spraying.

14. The method for producing a seat element according to any one of claims 1 to 13, wherein the expanded foam layer (16) comprises portions of variable thickness.

15. The method for producing a seat element according to any one of claims 1 to 14, wherein the expanded foam layer (16) has a thickness of between 1 mm and 60 mm.
